# EUROPÄISCHE PATENTSCHRIFT

(11) **EP 2 407 399 B1**
(45) Veröffentlichungstag und Bekanntmachung des Hinweises auf die Patenterteilung: **24.04.2013**
(21) Anmeldenummer: 11172532.1
(22) Anmeldetag: 04.07.2011
(51) Int. Cl.: B65G 1/08, B65G 47/88

(54) **Rückhaltesicherung für ein Lagergut in einem Durchlaufregal**
Security barrier for a storage good in a gravity feed rack
Barrière de sécurité pour une marchandise de stockage sur une étagère inclinée

(30) Priorität: 12.07.2010 DE 102010031223
(43) Veröffentlichungstag der Anmeldung: 18.01.2012
(73) Patentinhaber: BITO-Lagertechnik Bittmann GmbH, 55590 Meisenheim (DE)
(72) Erfinder: Kemperdick, Arthur, 55758 Niederwörresbach (DE)
(74) Vertreter: Richardt Patentanwälte GbR

(56) Entgegenhaltungen:
- EP-A1- 1 213 242
- WO-A1-2004/110904
- DE-A1-102005 048 836

## Beschreibung

Die Erfindung betrifft eine Rückhaltesicherung für ein Lagergut in einem Durchlaufregal, eine Rollenleiste mit zumindest einer solchen Rückhaltesicherung und ein Durchlaufregal mit zumindest einer solchen Rollenleiste.

Ein Durchlaufregal weist üblicherweise eine Aufgabeseite und eine Entnahmeseite auf. Lagergüter werden an der Aufgabeseite in dem Durchlaufregal auf einer Rollenleiste positioniert. Durch die Schwerkraft werden die Lagergüter auf der schräg verlaufende Rollenleiste hin zur Entnahmeseite transportiert.

Eine Rückhaltesicherung in einem solchen Durchlaufregal dient dazu, dass ein Bewegen der Lagergüter von der Entnahmeseite hin zur Aufgabeseite vermieden wird. Die Rückhaltesicherung erlaubt also eine Bewegung des Lagerguts von der Aufgabeseite zur Entnahmeseite, aber nicht von der Entnahmeseite zur Aufgabeseite.

Aus der EP 1 213 242 A1 ist eine Rückhaltesicherung für ein Durchlaufregal bekannt. Diese Rückhaltesicherung ist so ausgebildet, dass ein Lagergut von der Aufgabeseite hin zur Entnahmeseite die Rückhaltesicherung so verschwenkt, dass die Bewegung des Lagerguts hin zur Entnahmeseite problemlos möglich ist. Bei einer Bewegung von der Entnahmeseite hin zur Aufgabeseite verschwenkt das Lagergut die Rückhaltesicherung so, dass die Rückhaltesicherung das Lagergut abbremst. Die Abbremsung erfolgt dabei dadurch, dass die Rückhaltesicherung durch das Drehmoment einer Feder mit einer Bremsfläche gegen das Lagergut gedrückt wird.

Die DE 102005048836 A1 beschreibt ein Durchlaufregal zur Kommissionierung von Lagereinheiten, das wenigstens eine von einer Beschickungsseite zu einer Kommissionierseite hin nach unten geneigten Laufbahn, deren Laufflächenebene von Rollen gebildet wird, und eine der Laufbahn zugeordnete Rücklaufsperre umfasst. Die Rücklaufsperre umfasst einen zweiarmigen Hebel, der aus einer Ruhestellung, in der sein erster Hebelarm über die Laufflächenebene vorsteht, gegen eine Rückstellkraft in zwei Richtungen unter die Laufflächenebene verschwenkbar ist, und ein im Abstand zu dem zweiarmigen Hebel unter der Laufflächenebene schwenkbar gelagertes Schwenkteil, das eine der Laufflächenebene von unten zugewandte Reibfläche aufweist. Der Hebel und das Schwenkteil sind so ausgebildet und angeordnet, dass das Schwenkteil bei einer Verschwenkung des ersten Heblearmes des Hebels zur Beschickungsseite hin durch den zweiten Hebelarm des Hebels nach oben verschwenkt wird und sich die Reibfläche des Schwenkteils auf Höhe der Laufflächenebene befindet, wenn sich das freie Ende des ersten Hebelarms bei dieser Verschwenkung auf Höhe der Laufflächenebene befindet.

Die DE 102005048836 A1 wird als nächstliegenter Stand der Technik gegenüber dem Gegenstand der Ansprüche 1, 12, 14, 15 angesehen.

Der vorliegenden Erfindung liegt demgegenüber die Aufgabe zugrunde, eine verbesserte Rückhaltesicherung, eine verbesserte Rollenleiste und ein verbessertes Durchlaufregal zu schaffen.

Die der Erfindung zugrunde liegenden Aufgaben werden mit den Merkmalen der unabhängigen Patentansprüche gelöst. Ausführungsformen der Erfindung sind in den abhängigen Patentansprüchen gegeben.

Erfindungsgemäß wird eine Rückhaltesicherung für ein Lagergut in einem Durchlaufregal mit einem Pendelkörper zum Pendeln um eine Pendelachse und mit Auslenkmitteln zum Auslenken des Pendelkörpers aus einer Ruheposition durch das Lagergut geschaffen. Die Auslenkmittel erstrecken sich in der Ruheposition über die Pendelachse hinaus nach oben hin. Ferner weist die Rückhaltesicherung eine Bremsfläche zum Abbremsen des Lagerguts auf. Die Bremsfläche ist schräg zur Pendelebene an dem Pendelkörper befestigt. Die schräge Befestigung meint hierbei, dass ein Winkel zwischen der Bremsfläche und der Pendelebene eingeschlossen wird. Vorteilhaft kann auch eine senkrechte Anordnung der Bremsfläche zur Pendelebene sein. Senkrecht meint hierbei ein Winkel zwischen 85 und 95°. Vorbeträgt der Winkel zwischen Bremsfläche und Pendelebene 40 - 140°. Die Befestigung der Bremsfläche an dem Pendelkörper kann stoffschlüssig oder formschlüssig erfolgen. Es ist auch eine Befestigung der Bremsfläche an dem Pendelkörper mit Befestigungsmitteln wie Schrauben, Nägeln oder Klebstoff möglich. Nach Ausführungsformen der Erfindung ist die Rückhaltesicherung dazu ausgebildet, in der Ruheposition in dem Durchlaufregal so gelagert zu sein, dass die Auslenkmittel nach oben aus der Transportebene für das Lagergut hervorstehen und die Bremsfläche sich unterhalb der Transportebene befindet. Die Transportebene wird hierbei durch die Rollenleiste definiert. Die Transportebene ist also die Ebene, auf der sich das Lagergut bewegt.

Nach Ausführungsformen der Erfindung ist die Rückhaltesicherung einstückig ausgebildet. Dies ist besonders vorteilhaft, da so die Bremsfläche besonders fest mit den übrigen Elementen der Rückhaltesicherung verbunden ist und besonders widerstandsfähig gegen die durch die Lagergüter auf die Bremsfläche ausgeübten Kräfte ist.

Nach Ausführungsformen der Erfindung umfassen die Auslenkmittel eine erste und eine zweite Auftrefffläche. Die erste Auftrefffläche ist dazu ausgebildet, bei Ausübung einer Kraft durch das Lagergut auf die erste Auftrefffläche die Rückhaltesicherung um die Pendelachse in einer ersten Richtung auszulenken. Die Rückhaltesicherung ist ferner dazu ausgebildet, bei einer Auslenkung in die erste Richtung eine Durchlassposition einzunehmen, wobei in der Durchlassposition das Lagergut die Rückhaltesicherung nur an dem Auflagesteg berührt.

Nach Ausführungsformen der Erfindung ist die zweite Auftrefffläche dazu ausgebildet, bei Ausübung einer Kraft durch das Lagergut auf die zweite Auftrefffläche die Rückhaltesicherung um die Pendelachse in einer zweiten Drehrichtung auszulenken. Die Rückhaltesicherung ist ferner dazu ausgebildet, bei einer Auslenkung in die zweite Drehrichtung eine Bremsposition einzunehmen. In der Bremsposition steht die Bremsfläche nach oben auf der Transportebene hervor. Vorzugsweise steht die Bremsfläche um 0,3-0,5mm aus der Transportebene hervor. Die Rückhaltesicherung ist außerdem dazu ausgebildet, in der Bremsposition das Lagergut mit dem Auflagesteg und der Bremsfläche zu stützen.

Ausführungsformen der Erfindung sind vorteilhaft, da die erste Auftrefffläche vorzugsweise der Aufgabeseite des Durchlaufregals zugewandt ist und somit ein Lagergut, das sich von der Aufgabeseite hin zur Entnahmeseite bewegt und somit auf die erste Auftrefffläche der Rückhaltesicherung trifft und eine Kraft auf sie ausübt, die Rückhaltesicherung in die Durchlassposition auslenkt. Dadurch ist eine Bewegung des Lagerguts über die Rückhaltesicherung hinweg problemlos möglich, da die Rückhaltesicherung durch das Lagergut nur an dem Auflagesteg berührt wird.

Die zweite Auftrefffläche hingegen ist vorzugsweise der Entnahmeseite hin zugewandt, sodass ein Lagergut, das von der Entnahmeseite zur Aufgabeseite bewegt wird, eine Kraft auf die zweite Auftrefffläche ausübt und somit die Rückhaltesicherung in die Bremsposition auslenkt. In dieser Position wird das Lagergut durch die nach oben aus der Transportebene hervorstehende Bremsfläche gebremst. Dadurch, dass das Lagergut die Rückhaltesicherung am Auflagesteg und der Bremsfläche berührt und durch sie gestützt wird, ergibt sich, dass das Lagergut immer mit einer ausreichender Kraft gebremst wird. Denn das Lagergut übt durch die Gewichtskraft sowohl eine Kraft auf den Auflagesteg als auch eine Kraft auf die Bremsfläche aus. Dadurch, dass eine Kraft auf den Auflagesteg ausgeübt wird, entsteht ein Drehmoment in einer ersten Richtung. Dieses Drehmoment in der ersten Richtung steht einem zweiten Drehmoment in einer zweiten Richtung entgegen, wobei das zweite Drehmoment in der zweiten Richtung durch die Gewichtskraft des Lagerguts auf die Bremsfläche entsteht. In der Bremsposition sind das erste und das zweite Drehmoment gleich groß, sodass die Rückhaltesicherung in der Bremsposition bleibt. Dies ist besonders vorteilhaft, da so die Rückhaltesicherung sowohl zur Abbremsung von schweren als auch von leichten Lagergütern geeignet ist. Bei einem schweren Lagergut wirkt dem relativ großen zweiten Drehmoment ein ebenso großes erstes Drehmoment entgegen, wohingegen bei relativ leichten Lagergütern dem relativ kleinen zweiten Drehmoment ein relativ kleines erstes Drehmoment entgegensteht. Die Rückhaltesicherung nach Ausführungsformen der Erfindung ist also bezüglich des Gewichts des Lagerguts selbstadaptiv.

Nach Ausführungsformen der Erfindung ist die Bremsfläche eine Oberfläche eines Klemmstücks. Bei der Abbremsung eines Lagerguts in der Bremsposition befindet sich das Klemmstück mit der Bremsfläche zwischen dem Pendelkörper und dem Lagergut, wodurch das Klemmstück eingeklemmt wird.

Nach Ausführungsformen der Erfindung ist die Pendelachse aus Stahl hergestellt, sodass die Rückhaltesicherung aus zwei Stücken besteht: Zum einen die Stahlpendelachse und zum anderen das Spritzgussteil.

Nach Ausführungsformen der Erfindung weist das Klemmstück eine abgeschrägte Oberfläche als Bremsfläche auf. Dies ist besonders vorteilhaft, da durch die schräge Oberfläche die Bremswirkung erhöht wird.

Nach Ausführungsformen der Erfindung besteht das Klemmstück aus einem elastischen Material und ist dazu ausgebildet, beim Stützen des Lagerguts elastisch komprimiert zu werden. Die elastische Komprimierung ist vorteilhaft, da so die Gleit- und Haftreibung zwischen dem Lagergut und der Bremsfläche erhöht wird und somit auch die Bremskraft erhöht wird.

Nach Ausführungsformen der Erfindung weist die Rückhaltesicherung einen Schwerpunkt auf. Die Distanz zwischen dem Schwerpunkt und der zweiten Auftrefffläche ist geringer als die Distanz zwischen dem Schwerpunkt der ersten Auftrefffläche. Mit anderen Worten ist der Pendelkörper asymmetrisch ausgebildet. Dadurch, dass sich der Schwerpunkt näher zur zweiten Auftrefffläche als zur ersten Auftrefffläche befindet, hängt die Rückhaltesicherung in der Ruheposition so in der Rollenleiste, dass der Auflagesteg von der Pendelachse aus gesehen zur Entnahmeseite des Durchlaufregals hin verschoben ist. Dies ist vorteilhaft, da ein Lagergut, das von oben auf die Rückhaltesicherung gesetzt wird, so zur Entnahmeseite hin transportiert und nicht abgebremst wird. Eine Beschädigung der Rückhaltesicherung in solch einem Fall ist durch die seitliche Versetzung des Auflagestegs relativ zur Pendelachse ebenfalls ausgeschlossen, wenn ein Lagergut von oben auf die Rückhaltesicherung gesetzt wird.

Nach Ausführungsformen der Erfindung bestehen der Pendelkörper und die Auslenkmittel aus einer ersten Komponente und die Bremsfläche aus einer zweiten Komponente. Die Rückhaltesicherung wurde in diesem Fall mit einem 2-Komponenten-Spritzgussverfahren hergestellt. So wird gewährleistet, dass, obwohl die Bremsfläche und der Pendelkörper und die Auslenkmittel aus zwei verschiedenen Komponenten bestehen, die Rückhaltesicherung einstückig hergestellt werden kann. Die Wahl von zwei verschiedenen Komponenten für die Bremsfläche und den Pendelkörper und die Auslenkmittel ist vorteilhaft, da an den Pendelkörper, die Auslenkmittel und die Bremsfläche unterschiedliche Anforderungen gestellt werden. Während die Auslenkmittel bei einem Kontakt mit der Oberfläche des Lagerguts möglichst wenig Reibung aufweisen sollen, soll die Bremsfläche möglichst viel Reibung zwischen ihr und der Oberfläche des Lagerguts erzeugen.

Nach Ausführungsformen der Erfindung ist die erste Komponente Polypropylen (PP) und die zweite Komponente ein thermoplastisches Elastomer (TPE), wie zum Beispiel ein thermoplastisches Elastomer auf Olefin-Basis, ein vernetztes thermoplastisches Elastomer auf Olefin-Basis, ein thermoplastisches Elastomer auf Urethan-Basis, ein thermoplastisches Copolyester, Styrolblock-Copolymere oder thermoplastische Copolyamide.

Nach Ausführungsformen der Erfindung weist die erste Komponente mit der Oberfläche des Lagerguts einen geringeren Reibkoeffizienten als die zweite Komponente mit der Oberfläche des Lagerguts auf.

In einem weiteren Aspekt betrifft die Erfindung eine Rollenleiste mit zumindest einer Rückhaltesicherung nach Ausführungsformen der Erfindung, einer Leiste und mehreren Rollen, wobei die Rollen Rollenachsen umfassen, wobei die Leiste mehrere Achsaufnahmen aufweist, wobei jede der Rollenachsen in zwei der Achsaufnahmen gelagert ist, wobei die Rollen um die Rollenachsen drehbar sind, wobei die Pendelachse der zumindest einen Rückhaltesicherung in zwei der Achsaufnahmen gelagert ist.

Dies ist besonders vorteilhaft, da die Pendelachse in die gleichen Achsaufnahmen passt wie die Rollenachsen. Die Rückhaltesicherung kann also einfach anstatt einer oder mehrerer Rollen in die Rollenleiste eingefügt werden. Somit kann leicht die gewünschte Bremskraft eingestellt werden. Die Bremskraft kann leicht dadurch erhöht werden, dass eine oder mehrere Rollen durch eine oder mehrere Rückhaltesicherungen ersetzt werden, ohne dass etwas an den Leisten geändert werden muss. Zur Befestigung der Rückhaltesicherung werden die gleichen Achsaufnahmen verwendet, die auch zur Befestigung der Rollen verwendet werden.

Nach Ausführungsformen der Erfindung sind die Rollenachsen und/oder die Pendelachse in den Achsaufnahmen unter Ausbildung einer Schnappverbindung gelagert. Dies ermöglicht ein einfaches Austauschen der Rollen und/oder der Rückhaltesicherung bei gleichzeitig sicherer Befestigung der Rollen und/oder der Rückhaltesicherung an den Leisten.

In noch einem weiteren Aspekt betrifft die Erfindung einen Bausatz für eine Rollenleiste, wobei der Bausatz eine Leiste, mehrere Rollen und zumindest eine Rückhaltesicherung nach einem der Ansprüche 1-11 umfasst, wobei die Leiste Achsaufnahmen aufweist, wobei jede der Rollenachsen in zwei der Achsaufnahmen lagerbar ist, wobei die Rollen um die Rollenachsen drehbar sind, wobei die Pendelachse der zumindest einen Rückhaltesicherung in zwei der Achsaufnahmen lagerbar ist

In noch einem weiteren Aspekt betrifft die Erfindung ein Durchlaufregal mit zumindest einer Rollenleiste nach Ausführungsformen der Erfindung.

Im Weiteren werden Ausführungsformen der Erfindung mit Bezugnahme auf die Zeichnungen näher erläutert. Es zeigen:
- Figur 1: ist eine schematische perspektivische Darstellung einer Rückhaltesicherung,
- Figur 2: eine schematische Darstellung eines Ausschnitts einer Rollenleiste mit einer Rückhaltesicherung und einem Lagergut, das von der Aufgabeseite des Durchlaufregals hin zur Entnahmeseite des Durchlaufregals befördert wird,
- Figur 3: eine schematische Darstellung eines Ausschnitts Rollenleiste mit einer Rückhaltesicherung und einem Lagergut, das von der Entnahmeseite hin zur Aufgabeseite transportiert und durch die Rückhaltesicherung abgebremst wird, und
- Figur 4: eine schematische Seitenansicht einer Rückhaltesicherung.

Elemente der nachfolgenden Figuren, die einander entsprechen, sind mit denselben Bezugszeichen gekennzeichnet.

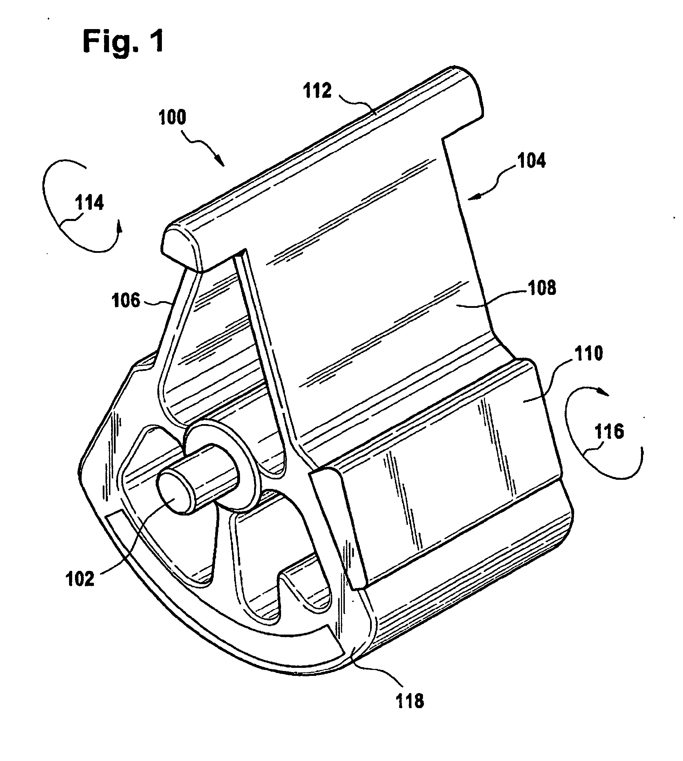

Figur 1 ist eine schematische perspektivische Ansicht einer Rückhaltesicherung 100 für eine Rollenleiste in einem Durchlaufregal. Die Rückhaltesicherung 100 ist dazu ausgebildet, mit der Pendelachse 102 an einer Rollenleiste befestigt zu werden. Die Befestigung der Pendelachse 102 erfolgt dabei an den für die Rollen der Rollenleiste vorgesehenen Befestigungsmitteln. Vorzugsweise ist also der Durchmesser der Pendelachse 102 genauso groß wie der Achsdurchmesser einer Rolle der Rollenleiste. Ferner weist die Rückhaltesicherung 100 Auslenkmittel 104 auf. Die Auslenkmittel 104 bestehen aus einer ersten Auftrefffläche 106 und einer zweiten Auftrefffläche 108. Unterhalb der zweiten Auftrefffläche 108 befindet sich die Bremsfläche 110. Oberhalb der Auslenkmittel 104 befindet sich der Auflagesteg 112.

Die Rückhaltesicherung 100 wird so in einer Rollenleiste eingebaut, dass die erste Auftrefffläche 106 zur Aufgabeseite des Durchlaufregals und die zweite Auftrefffläche 108 zur Entnahmeseite des Durchlaufregals zeigt. Wenn sich nun ein Lagergut von der Aufgabeseite hin zur Entnahmeseite bewegt und auf die Rückhaltesicherung 100 trifft, übt das Lagergut eine Kraft auf die erste Auftrefffläche 106 aus und lenkt die Rückhaltesicherung 100 in eine erste Richtung aus. Das Lagergut wird dann über die Rückhaltesicherung 100 hinweg zur Entnahmeseite hin transportiert. Hierbei berühren sich der Auflagesteg 112 und die Oberfläche des Lagerguts, da der Auflagesteg 112 ein Bestandteil der Transportebene der Rollenfeiste ist.

Bei einem sich von der Aufgabeseite hin zur Entnahmeseite bewegendem Lagergut übt das Lagergut beim Auftreffen auf die Rückhaltesicherung 100 eine Kraft auf die zweite Auftrefffläche 108 aus, sodass die Rückhaltesicherung 100 in eine zweite Richtung ausgelenkt wird. In der zweiten Richtung wird die Rückhaltesicherung 100 in eine Bremsposition gedreht. In der Bremsposition wird die Bremsfläche 110 gegen die Oberfläche des Lagerguts gedrückt. Das Lagergut hat hierbei Kontakt mit der Bremsfläche 110 und dem Auflagesteg 112. Das Lagergut übt durch seine Gewichtskraft ein erstes Drehmoment in eine erste Richtung 114 und ein zweites Drehmoment in eine zweite Richtung 116 auf die Rückhaltesicherung 100 aus.

Das Lagergut liegt also sowohl auf dem Auflagesteg 112 als auch auf der Bremsfläche 110 auf und drückt mit seiner Gewichtskraft einerseits den Auflagesteg 112 und andererseits ebenfalls die Bremsfläche 110 nach unten. Unabhängig vom Gewicht des Lagerguts stellt sich ein Gleichgewicht ein. In diesem Gleichgewicht ragt die Bremsfläche 110 aus der Transportebene der Rollenleiste hinaus, sodass das Lagergut durch die Bremsfläche 110 abgebremst wird.

Außerdem umfasst die Rückhaltesicherung 100 einen Pendelkörper 118, der dazu dient, dass sich die Rückhaltesicherung ohne Krafteinwirkung eines Lagerguts in einer Ruheposition befindet. Die Ruheposition wird durch den Schwerpunkt der Rückhaltesicherung 100 bestimmt. Durch den Pendelkörper 118 wird sichergestellt, dass sich die Auslenkmittel 104 und der Auflagesteg 112 oberhalb der Transportebene der Rollenleiste befinden. Außerdem ist vorzugsweise der Schwerpunkt der Rückhaltesicherung durch den Pendelkörper so bestimmt, dass die Rückhaltesicherung 100 in der Ruheposition so gelagert ist, dass der Auflagesteg 112 von der Pendelachse 102 aus gesehen hin zur Entnahmeseite verschoben ist. Der Schwerpunkt der Rückhaltesicherung 100 befindet sich also vorzugsweise unterhalb der Pendelachse und von der Pendelachse aus gesehen hin zur Bremsfläche verschoben. Dies ist vorteilhaft, da so ein Lagergut, das von oben direkt auf die Rückhaltesicherung 100 aufgesetzt wird, zur Entnahmeseite hin transportiert werden kann. Außerdem wird verhindert, dass durch ein direkt von oben auf den Auflagesteg 112 aufgesetztes Lagergut die Rückhaltesicherung 100 beschädigt wird.

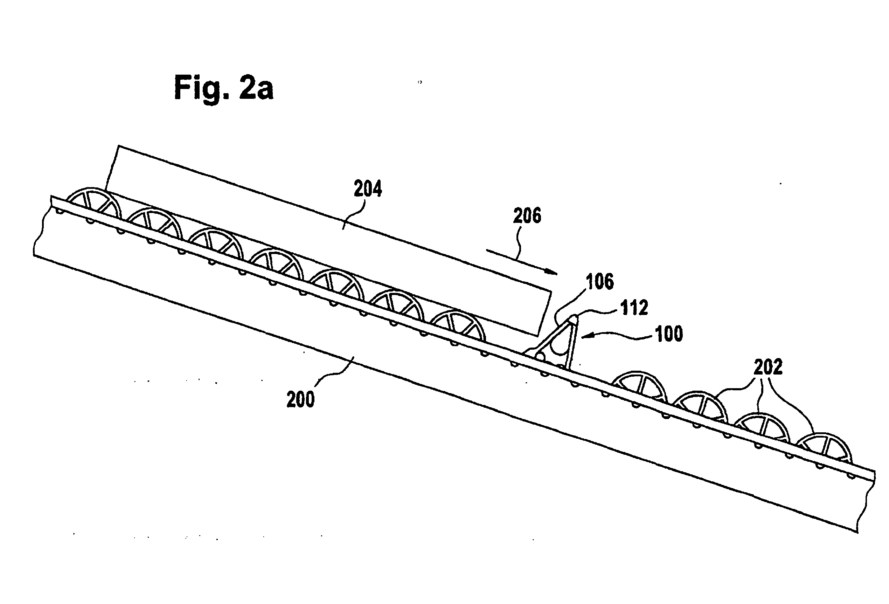

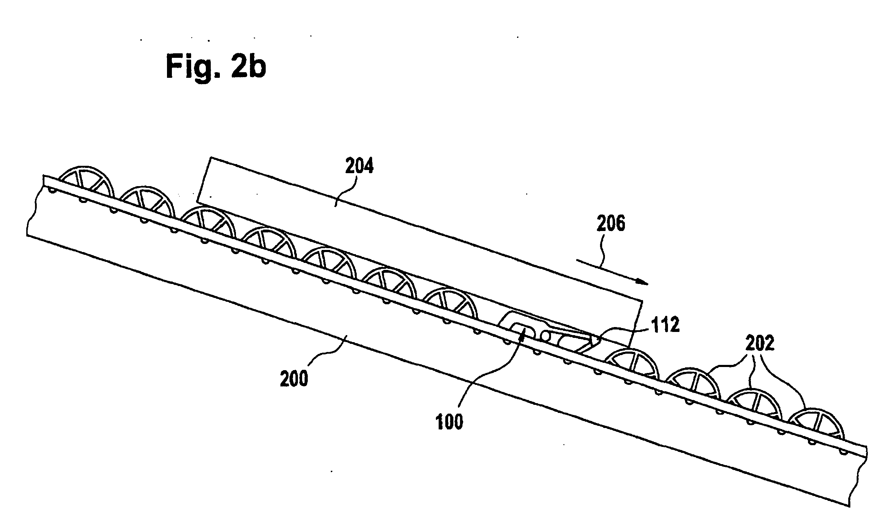

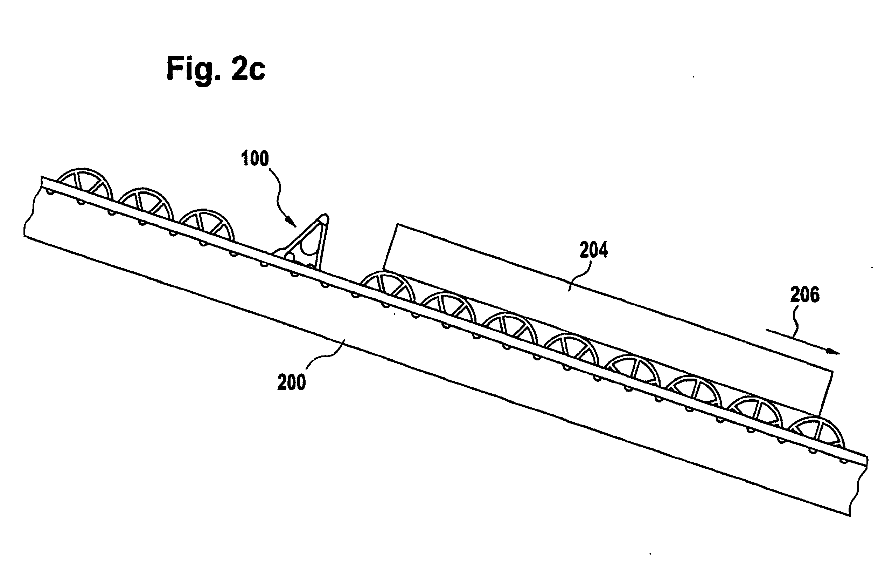

Figur 2 ist eine schematische Ansicht eines Ausschnitts einer Rollenleiste 200 mit mehreren Rollen 202. Die Rollen 202 bilden eine Transportebene für ein Lagergut 204. Das Lagergut 204 bewegt sich in einer ersten Richtung von der Aufgabeseite des Durchlaufregals zur Entnahmeseite.

Außerdem befindet sich in der Rollenleiste 200 befestigt die Rückhaltesicherung 100. Figur 2a zeigt deutlich, dass der Auflagesteg 112 der Rückhaltesicherung 100 von der Pendelachse (nicht sichtbar) hin zur Entnahmeseite verschoben ist. Dies wird dadurch erreicht, dass sich der Schwerpunkt der Rückhaltesicherung 100 von der Pendelachse der Rückhaltesicherung 100 aus gesehen näher zur Entnahmeseite als zur Aufgabeseite des Durchlaufregals befindet.

Das Lagergut 204 trifft die Rückhaltesicherung 100 bei der Bewegung in Richtung 206 an der ersten Auftrefffläche 106 und lenkt somit die Rückhaltesicherung 100 in die erste Richtung aus. Richtung 206 verläuft dabei von der Aufgabeseite des Durchlaufregals zur Entnahmeseite des Durchlaufregals.

Figur 2b ist eine schematische Ansicht der Rollenleiste 200 mit der Rückhaltesicherung 100, wobei auf der Rollenleiste 200 über eine Transportebene das Lagergut 204 in Richtung 206 transportiert wird. Im Vergleich zur Figur 2a hat sich das Lagergut 204 weiter in Richtung 206 bewegt und dabei die Rückhaltesicherung 100 in die erste Richtung ausgelenkt, sodass das Lagergut 204 die Rückhaltesicherung 100 lediglich am Auflagesteg 112 berührt. Hierdurch wird erreicht, dass dem Lagergut, das sich in Richtung 206 bewegt, kein großer Widerstand durch die Rückhaltesicherung entgegengestellt wird.

Figur 2c ist eine schematische Ansicht der Rollenleiste 200 mit der Rückhaltesicherung 100 im Zustand, nachdem das Lagergut 204 über die Rückhaltesicherung 100 hinweg in Richtung 206 zur Entnahmeseite hin bewegt wurde. Figur 2c verdeutlicht, dass sich die Rückhaltesicherung aufgrund der Lage des Schwerpunktes der Rückhaltesicherung 100 unterhalb der Pendelachse (nicht dargestellt) wieder in die Ruheposition aus Figur 2a einpendelt. Wenn also ein nachfolgendes Lagergut an der Rückhaltesicherung 100 ankommt, tritt die gleiche Situation wie in Figur 2a ein.

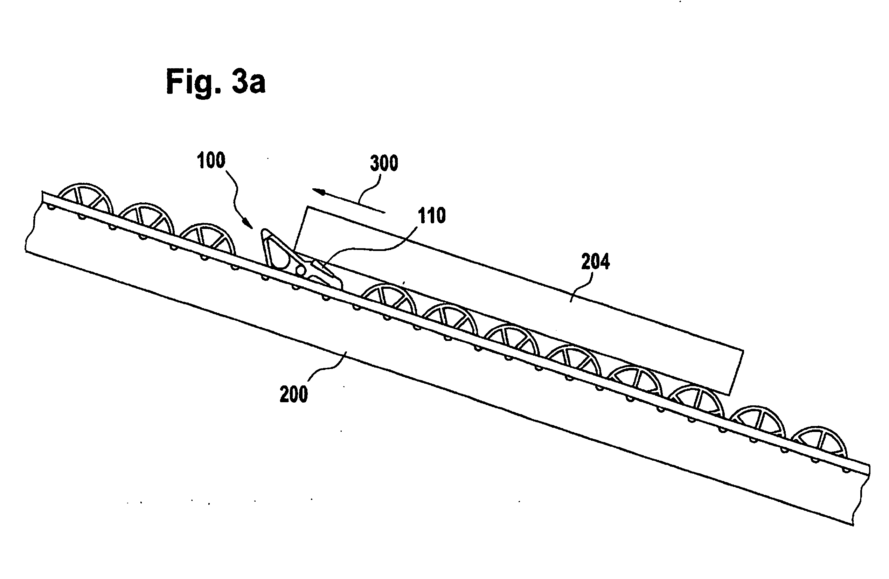

Figur 3a ist eine schematische Ansicht der Rollenleiste 200 wie in Figuren 2a - c, wobei auf der Rollenleiste 200 ein Lagergut 204 transportiert wird. Das Lagergut 204 bewegt sich allerdings in Figur 3a in entgegengesetzter Richtung 300, also von der Entnahmeseite weg hin zur Aufgabeseite. Die Rollenleiste 200 weist außerdem die Rückhaltesicherung 100 auf.

Dadurch, dass sich das Lagergut 204 in die entgegengesetzte Richtung 300 hin zur Aufgabeseite bewegt, wird die Rückhaltesicherung 100 in die zweite Richtung ausgelenkt, wodurch die Bremsfläche 110 nach oben über die Transportebene hinaus ausgelenkt wird und Kontakt mit der Oberfläche des Lagerguts 204 bekommt. Dadurch, dass die Bremsfläche 110 nach oben aus der Transportebene heraussteht und somit zwischen Lagergut 204 und Rückhaltesicherung 100 eingeklemmt wird, wird das Lagergut 204 abgebremst. Vorzugsweise besteht die Bremsfläche 110 aus einem Material, das mit der Oberfläche des Lagerguts 204 einen hohen Reibkoeffizienten aufweist. Beispielsweise kann die Bremsfläche 110 aus einem thermoplastischen Elastomer bestehen.

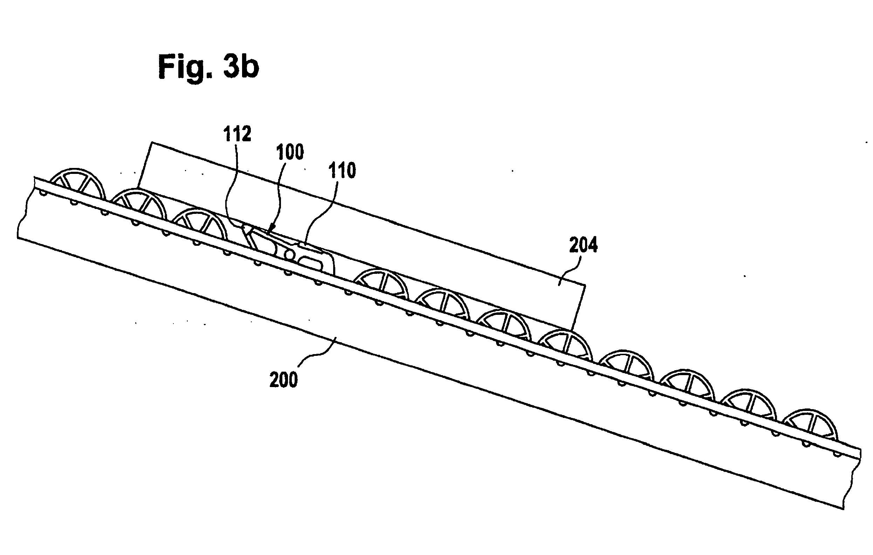

Figur 3b ist eine schematische Ansicht einer Rollenleiste 200, über die das Lagergut 204 transportiert wurde. In Figur 3b ist das Lagergut 204 aufgrund der Bremswirkung der Rückhaltesicherung 100 mit der Bremsfläche 110 zum Stehen gekommen. Das Lagergut 204 wurde, wie in Figur 3a gezeigt, in Richtung 300 weg von der

Entnahmeseite hin zur Aufgabeseite des Durchlaufregals bewegt und wurde deshalb durch die Rückhaltesicherung 100 bis zum Stillstand abgebremst. Das Lagergut 204 lagert mit einem Teil seiner Gewichtskraft auf dem Auflagesteg 112 und mit einem anderen Teil der Gewichtskraft auf der Bremsfläche 110. Bezüglich der Drehmomente, die auf die Rückhaltesicherung 100 wirken, besteht ein Gleichgewicht, da sich die Rückhaltesicherung 100 nicht mehr bewegt. Dies ist vorteilhaft, da die Rückhaltesicherung 100 somit selbstadaptiv auf unterschiedliche Gewichte von Lagergütern reagiert. Bei schweren Lagergütern 204 ist das Drehmoment, das auf den Auflagesteg 112 wirkt, genauso groß wie das Drehmoment, das auf die Bremsfläche 110 wirkt. Bei leichteren Lagergütern 204 sind beide Drehmomente kleiner aber immer noch gleich groß.

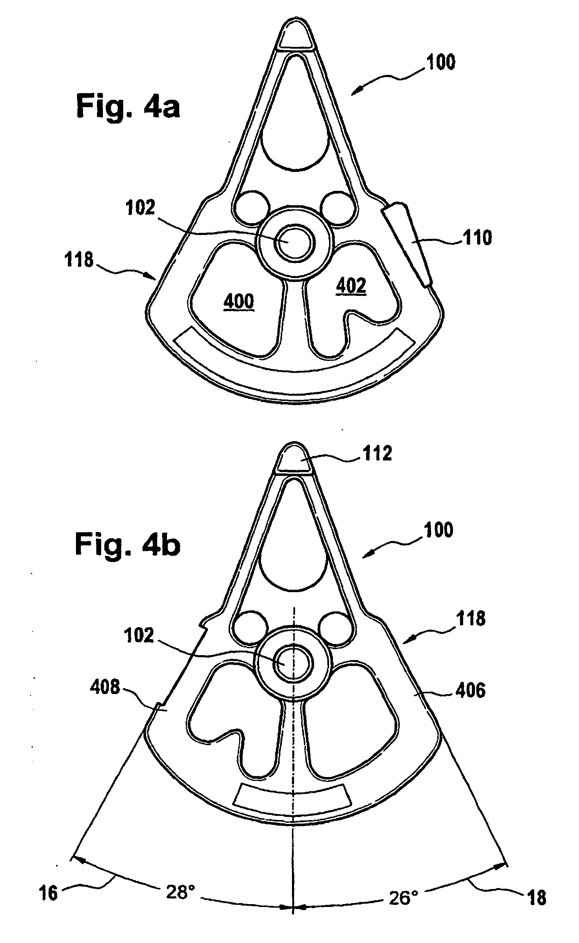

Figur 4a ist eine schematische Ansicht einer Rückhaltesicherung 100. Damit die Rückhaltesicherung 100 einen Schwerpunkt hat, der von der Pendelachse aus gesehen hin zur Bremsfläche 110 versetzt ist, hat der Pendelkörper 118 zwei Hohlräume 400 und 402. Der Hohlraum 402 ist dabei kleiner als der Hohlraum 400. Der Hohlraum 402 befindet sich von der Pendelachse 102 aus gesehen hin zur Bremsfläche 110 versetzt, wohingegen der Hohlraum 400 von der Pendelachse 102 aus gesehen zur anderen Richtung hin versetzt ist. Dadurch, dass der Hohlraum 402 ein kleineres Volumen hat als der Hohlraum 400, wird der Schwerpunkt der Rückhaltesicherung 100 hin zur Bremsfläche 110 verschoben.

Figur 4b ist eine schematische Ansicht einer Rückhaltesicherung 100. Im Vergleich zu Figur 4a ist die Rückansicht der Rückhaltesicherung 100 dargestellt. Die Bremsfläche 110 ist in Figur 4b nicht dargestellt. Der Pendelkörper 118 der Rückhaltesicherung 100 weist zwei Schenkel 406 und 408 auf. Der Schenkel 408 ist dazu ausgebildet, die Bremsfläche 110 aufzunehmen. Besonders vorteilhaft ist hier, dass der Winkel 16 zwischen dem Lot, das von der Pendelachse (102) gefällt wird, und dem Schenkel 408 größer ist als der Winkel 18, der sich zwischen dem Lot, das von der Pendelachse 102 gefällt wird, und dem Schenkel 406 befindet. Dies garantiert, dass in der Bremsposition die Bremsfläche 110 über die Transportebene der Rollenleiste hinausragt, während bei einer Bewegung des Lagerguts 204 von der Aufgabeseite hin zur Entnahmeseite der Schenkel 406 nicht über die Transportebene der Rollenleiste hinausragt und das Lagergut 204 somit lediglich den Auflagesteg 112 berührt.

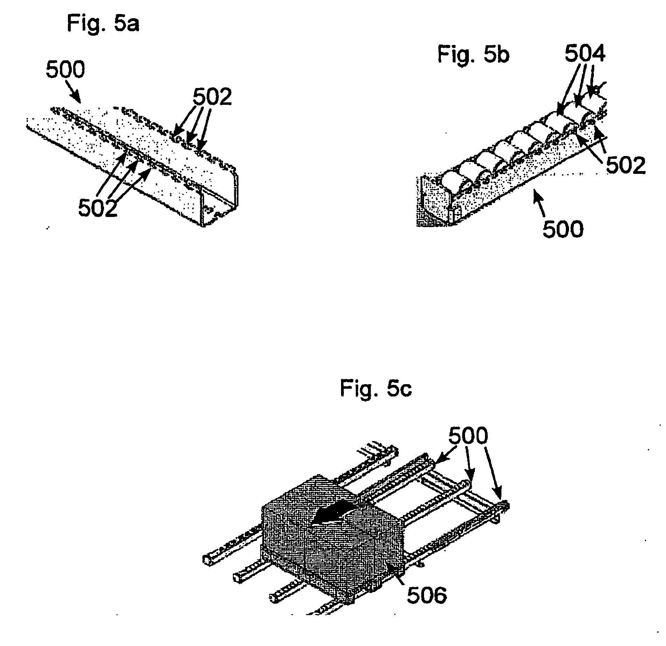

Fig. 5a ist eine schematische Ansicht einer Leiste 500 mit mehreren Achsaufnahmen 502. Die Leiste ist Bestandteil einer Rollenleiste oder eines Bausatzes für eine Rollenleiste In den Achsaufnahmen 502 können beispielsweise Achsen von Rollen gelagert werden oder aber auch eine oder mehrere Pendelachsen einer oder mehrerer Rückhaltesicherung nach Ausführungsformen der Erfindung. Eine oder mehrere Rollen können somit einfach durch eine oder mehrere Rückhaltesicherungen ersetzt werden oder umgekehrt, da die gleichen Achsaufnahmen sowohl für die Rückhaltesicherung als auch für die Rollen verwendet wird.

Fig. 5b zeigt schematisch die Leiste 500 mit den Achsaufnahmen 502 und eingesetzten Rollen 504. Die Achsen der Rollen 504 sind in den Achsaufnahmen 502 so gelagert, dass die Rollen 504 um die Achsen drehbar sind. Somit kann ein Transportgut leicht über die Rollen transportiert werden. Die Rollenachsen können beispielsweise in den Achsaufnahmen 502 lose gelagert sein, sodass sie ohne großen Kraftaufwand nach oben aus den Achsaufnahmen 502 entnehmbar sind. Die Rollenachsen können auch unter Ausbildung einer Schnapp- oder Klemmverbindung in den Achsaufnahmen 502 gelagert sein.

Eine oder mehrere der Rollen können durch eine oder mehrere Rückhaltesicherungen nach Ausführungsformen der Erfindung einfach ersetzt werden, indem sie aus der Leiste 500 entnommen werden. In die frei werdenden Achaufnahmen 502 kann dann einfach die Pendelachse der Rückhaltesicherung eingesetzt werden.

Fig. 5c ist eine schematische Ansicht einer Transportbahn für ein Lagergut 506, die aus mehreren Rollenleisten besteht. In Fig. 5c wird das Lagergut 506 über drei Rollenleisten transportiert. Es ist jedoch auch möglich, dass mehr oder weniger Rollenleisten für den Transport des Lagerguts 506 verwendet werden. Jeder der Rollenleisten umfasst eine Leiste 500, mehrere Achsaufnahmen 502 und mehrere Rollen 504.

In die Achsaufnahmen 502 können anstatt der Rollen 504 auch Rückhaltesicherungen nach Ausführungsformen der Erfindung eingesetzt werden. In diesem Falle kann der Transport des Lagerguts 506 in eine Richtung gebremst werden, ohne dass der Transport des Lagerguts 506 in die andere Richtung gebremst wird.

### Bezugszeichenliste

- 100: Rückhaltesicherung
- 102: Pendelachse
- 104: Auslenkmittel
- 106: Auftrefffläche
- 108: Auftrefffläche
- 110: Bremsfläche
- 112: Auflagesteg
- 114: Richtung
- 116: Richtung
- 118: Pendelkörper
- 200: Rollenleiste
- 202: Rollen
- 204: Lagergut
- 206: Richtung
- 300: Richtung
- 400: Hohlraum
- 402: Hohlraum
- 406: Schenkel
- 408: Schenkel
- 500: Leiste
- 502: Achsaufnahmen
- 504: Rollen
- 506: Lagergut

## Patentansprüche

1. Rückhaltesicherung (100) für ein Lagergut (204) in einem Durchlaufregal mit einem Pendelkörper (118) zum Pendeln um eine Pendelachse (102) und mit Auslenkmitteln (104) zum Auslenken des Pendelkörpers (118) aus einer Ruheposition durch das Lagergut (204), wobei sich die Auslenkmittel (104) in der Ruheposition über die Pendelachse (102) hinaus nach oben hin erstrecken und mit einer Bremsfläche (110) zum Abbremsen des Lagerguts (204), wobei die Bremsfläche (110) schräg zur Pendelebene an dem Pendelkörper (118) befestigt ist, wobei die Rückhaltesicherung (100) dazu ausgebildet ist, in der Ruheposition in dem Durchlaufregal so gelagert zu sein, dass die Auslenkmittel (104) nach oben aus der Transportebene für das Lagergut (204) hervorstehen und die Bremsfläche (110) sich unterhalb der Transportebene befindet.

2. Rückhaltesicherung (100) nach einem der vorhergehenden Ansprüche, wobei die Auslenkmittel (104) eine erste (106) und eine zweite Auftrefffläche (108) umfassen, wobei die erste Auftrefffläche (106) dazu ausgebildet ist, bei Ausübung einer Kraft durch das Lagergut (204) auf die erste Auftrefffläche (106) die Rückhaltesicherung (100) um die Pendelachse (102) in einer ersten Drehrichtung auszulenken, wobei die Rückhaltesicherung (100) dazu ausgebildet ist, bei einer Auslenkung in die erste Drehrichtung eine Durchlassposition einzunehmen, wobei in der Durchlassposition das Lagergut (204) die Rückhaltesicherung (100) nur an dem Auflagesteg berührt.

3. Rückhaltesicherung (100) nach Anspruch 2, wobei die zweite Auftrefffläche (108) dazu ausgebildet ist, bei Ausübung einer Kraft durch das Lagergut (204) auf die zweite Auftrefffläche (108) die Rückhaltesicherung (100) um die Pendelachse (102) in einer zweiten Drehrichtung auszulenken, wobei die Rückhaltesicherung (100) dazu ausgebildet ist, bei einer Auslenkung in die zweite Richtung eine Bremsposition einzunehmen, wobei in der Bremsposition die Bremsfläche (110) nach oben aus der Transportebene hervorsteht, und wobei die Rückhaltesicherung (100) dazu ausgebildet ist, in der Bremsposition das Lagergut (204) mit dem Auflagesteg und der Bremsfläche (110) zu stützen.

4. Rückhaltesicherung (100) nach einem der vorhergehenden Ansprüche, wobei die Bremsfläche (110) eine Oberfläche eines Klemmstücks ist.

5. Rückhaltesicherung (100) nach Anspruch 4, wobei das Klemmstück eine abgeschrägte Oberfläche als Bremsfläche (110) aufweist

6. Rückhaltesicherung (100) nach einem der Ansprüche 4 oder 5, wobei das Klemmstück aus einem elastischen Material besteht und dazu ausgebildet ist, beim Stützen des Lagerguts (204) elastisch komprimiert zu werden.

7. Rückhaltesicherung (100) nach einem der vorhergehenden Ansprüche, wobei die Rückhaltesicherung (100) einen Schwerpunkt aufweist, wobei die Distanz zwischen dem Schwerpunkt und der zweiten Auftrefffläche geringer ist als die Distanz zwischen dem Schwerpunkt und der ersten Auftrefffläche.

8. Rückhaltesicherung (100) nach einem der vorhergehenden Ansprüche, wobei die Rückhaltesicherung (100) einstückig ausgebildet ist.

9. Rückhaltesicherung (100) nach Anspruch 8, wobei der Pendelkörper (118) und die Auslenkmittel (104) aus einer ersten Komponente bestehen und die Bremsfläche (110) aus einer zweiten Komponente besteht, und wobei die Rückhaltesicherung (100) mit einem Zwei-Komponenten-Spritzgussverfahren hergestellt wurde.

10. Rückhaltesicherung (100) nach Anspruch 9, wobei die erste Komponente Polypropylen und die zweite Komponente ein thermoplastisches Elastomer ist.

11. Rückhaltesicherung (100) nach einem der Ansprüche 9 oder 10, wobei die erste Komponente einen geringeren Reibungskoeffizienten mit der Oberfläche des Lagerguts (204) aufweist als die zweite Komponente mit der Oberfläche des Lagerguts (204).

12. Rollenleiste mit zumindest einer Rückhaltesicherung (100) nach einem der vorhergehenden Ansprüche, einer Leiste und mehreren Rollen, wobei die Rollen Rollenachsen umfassen, wobei die Leiste mehrere Achsaufnahmen aufweist, wobei jede der Rollenachsen in zwei der Achsaufnahmen gelagert ist, wobei die Rollen um die Rollenachsen drehbar sind, wobei die Pendelachse (102) der zumindest einen Rückhaltesicherung (100) in zwei der Achsaufnahmen gelagert ist.

13. Rollenleiste nach Anspruch 12, wobei die Rollenachsen und/oder die Pendelachse (102) in den Achsaufnahmen unter Ausbildung einer lösbaren Schnappverbindung gelagert sind.

14. Bausatz für eine Rollenleiste, wobei der Bausatz eine Leiste, mehrere Rollen und zumindest eine Rückhaltesicherung (100) nach einem der Ansprüche 1-11 umfasst, wobei die Leiste mehrere Achsaufnahmen aufweist, wobei jede der Rollenachsen in zwei der Achsaufnahmen lagerbar ist, wobei die Rollen um die Rollenachsen drehbar sind, wobei die Pendelachse (102) der zumindest einen Rückhaltesicherung (100) in zwei der Achsaufnahmen lagerbar ist

15. Durchlaufregal mit zumindest einer Rollenleiste nach einem der Ansprüche 12 oder 13.

## Claims

1. Retention device (100) for a stored product (204) in a flow rack comprising a pendulum body (118) for oscillating about a pendulum axle (102) and comprising deflection means (104) for deflecting the pendulum body (118) from an idle position via the stored product (204), wherein in the idle position the deflection means (104) extend upwards past the pendulum axle (102), and comprising a braking face (110) for braking the stored product (204), wherein the braking face (110) is fixed to the pendulum body (118) obliquely with respect to the oscillation plane, wherein the retention device (100) is designed to be mounted in the idle position in the flow rack such that the deflection means (104) project upwards from the transport plane for the stored product (204) and the braking face (110) is located below the transport plane.

2. Retention device (100) according to any of the preceding claims, wherein the deflection means (104) comprise a first (106) and a second impact face (108), wherein the first impact face (106) is designed to deflect the retention device (100) about the pendulum axle (102) in a first direction of rotation when a force is exerted on the first impact face (106) by the stored product (204), wherein the retention device (100) is designed to adopt a let-through position when deflected in the first direction of rotation, wherein the stored product (204) touches the retention device (100) only at the contact web in the let-through position.

3. Retention device (100) according to claim 2, wherein the second impact face (108) is designed to deflect the retention device (106) about the pendulum axle (102) in a second direction of rotation when a force is exerted on the second impact face (108) by the stored product (204), wherein the retention device (100) is designed to adopt a braking position when deflected in the second direction, wherein the braking face (110) projects upwards from the transport plane in the braking position, and wherein the retention device (100) is designed to support the stored product (204) by means of the contact web and the braking face (110) in the braking position.

4. Retention device (100) according to any of the preceding claims, wherein the braking face (110) is a surface of a clamping piece.

5. Retention device (100) according to claim 4, wherein the clamping piece comprises an oblique surface as a braking face (110)

6. Retention device (100) according to either claim 4 or claim 5, wherein the clamping piece consists of a resilient material and is designed to be resiliently compressed when supporting the stored product (204).

7. Retention device (100) according to any of the preceding claims, wherein the retention device (100) has a centre of gravity, wherein the distance between the centre of gravity and the second impact face is less than the distance between the centre of gravity and the first impact face.

8. Retention device (100) according to any of the preceding claims, wherein the retention device (100) is formed in one piece.

9. Retention device (106) according to claim 8, wherein the pendulum body (118) and the deflection means (104) consist of a first component and the braking face (110) consists of a second component, and wherein the retention device (100) was produced by two-component injection moulding.

10. Retention device (100) according to claim 9, wherein the first component is polypropylene and the second component is a thermoplastic elastomer.

11. Retention device (100) according to either claim 9 or claim 10, wherein the first component has a lower coefficient of friction with the surface of the stored product (204) than the second component has with the surface of the stored product (204).

12. Roller strip comprising at least one retention device (100) according to any of the preceding claims, a strip and a plurality of rollers, wherein the rollers comprise roller axles, wherein the strip comprises a plurality of axle sockets, wherein each of the roller axles is mounted in two of the axle sockets, wherein the rollers can be rotated about the roller axles, wherein the pendulum axle (102) of the at least one retention device (100) is mounted in two of the axle sockets.

13. Roller strip according to claim 12, wherein the roller axles and/or the pendulum axle (102) are mounted in the axle sockets so as to form a releasable snap connection.

14. Kit for a roller strip, wherein the kit comprises a strip, a plurality of rollers and at least one retention device (100) according to any of claims 1 to 11, wherein the strip comprises a plurality of axle sockets, wherein each of the roller axles can be mounted in two of the axle sockets, wherein the rollers can be rotated about the roller axles, wherein the pendulum axle (102) of the at least one retention device (100) can be mounted in two of the axle sockets.

15. Flow rack comprising at least one roller strip according to either claim 12 or claim 13.

## Revendications

1. Arrêt de sécurité (100) pour un article de stockage (204) sur une étagère d'écoulement, comprenant un corps pendulaire (118) pour osciller autour d'un axe d'oscillation (102) et des moyens de déviation (104) pour écarter le corps pendulaire (118) d'une position de repos par l'article de stockage (204), dans lequel les moyens de déviation (104) s'étendent dans la position de repos vers le haut au-delà de l'axe pendulaire (102), et une surface de freinage (110) pour freiner l'article de stockage (204), dans lequel la surface de freinage (110) est fixée sur le corps pendulaire (118) en oblique par rapport au plan pendulaire, dans lequel l'arrêt de sécurité (100) est conformé de manière qu'il soit monté en position de repos sur l'étagère d'écoulement de sorte que les moyens de déviation (104)dépassent vers le haut du plan de transport pour l'article de stockage (204) et que la surface de freinage (110) se trouve en dessous du plan de transport.

2. Arrêt de sécurité (100) selon la revendication 1, dans lequel les moyens de déviation (104) comprennent une première (106) et une seconde surface d'incidence (108), dans lequel la première surface d'incidence (106) est conformée de manière à, lors de l'application d'une force par l'article de stockage (204) sur la première surface d'incidence (106), dévier l'arrêt de sécurité (100) autour de l'axe pendulaire (102) dans un premier sens de rotation, dans lequel l'arrêt de sécurité (100) est conformé de manière à, lors de la déviation dans le premier sens de rotation, adopter une position de passage, dans lequel, dans la position de passage, l'article de stockage (204) vient en contact avec l'arrêt de sécurité (100) uniquement sur l'aile d'appui.

3. Arrêt de sécurité (100) selon la revendication 2, dans lequel la seconde surface d'incidence (108) est conformée de manière à, lors de l'application d'une force par l'article de stockage (204) sur la seconde surface d'incidence (108), dévier l'arrêt de sécurité (100) autour de l'axe pendulaire (102) dans un second sens de rotation, dans lequel l'arrêt de sécurité (100) est conformé de manière à adopter une position de freinage lors d'une déviation dans le second sens, dans lequel, en position de freinage, la surface de freinage (110) dépasse du plan de transport vers le haut, et dans lequel l'arrêt de sécurité (100) est conformé en sorte d'appuyer, en position de freinage, l'article de stockage (204) sur l'aile d'appui et la surface de freinage 110).

4. Arrêt de sécurité (100) selon l'une quelconque des revendications précédentes, dans lequel la surface de freinage (110) est une surface d'une pièce de blocage.

5. Arrêt de sécurité (100) selon la revendication 4, dans lequel la pièce de blocage présente une surface biseautée comme surface de freinage (110).

6. Arrêt de sécurité (100) selon la revendication 4 ou la revendication 5, dans lequel la pièce de blocage est constituée d'un matériau élastique et est conformée de manière à être soumise à une compression élastique lors de l'appui de l'article de stockage (204).

7. Arrêt de sécurité (100) selon l'une quelconque des revendications précédentes, dans lequel l'arrêt de sécurité (100) présente un point pivot, dans lequel la distance entre le point pivot et la seconde surface d'incidence est plus petite que la distance entre le point pivot et la première surface d'incidence.

8. Arrêt de sécurité (100) selon l'une quelconque des revendications précédentes, dans lequel l'arrêt de sécurité (100) est conformé d'un seul tenant.

9. Arrêt de sécurité (100) selon la revendication 8, dans lequel le corps pendulaire (118) et les moyens de déviation (104) sont constitués d'un premier composant et la surface de freinage (110) est constituée d'un second composant et dans lequel l'arrêt de sécurité (100) est fabriqué par un procédé de moulage par injection à deux composants.

10. Arrêt de sécurité (100) selon la revendication 9, dans lequel le premier composant est formé de polypropylène et le second composant d'un élastomère thermoplastique.

11. Arrêt de sécurité (100) selon l'une quelconque des revendications 9 ou 10, dans lequel le premier composant présente un coefficient de frottement avec la surface de l'article de stockage (204) plus petit que celui du second composant avec la surface de l'article de stockage (204).

12. Barre de guidage à rouleaux comprenant au moins un arrêt de sécurité (100) selon l'une quelconque des revendications précédentes, une barre de guidage et plusieurs rouleaux, dans laquelle les rouleaux comprennent des axes de rouleaux, dans laquelle la barre de guidage présente plusieurs cages d'axes, dans laquelle chacun des axes de rouleaux est monté dans deux des cages d'axes, dans laquelle les rouleaux peuvent tourner autour des axes de rouleaux, dans laquelle l'axe pendulaire (102) du au moins un arrêt de sécurité (100) est monté dans deux des cages d'axes.

13. Barre de guidage à rouleaux selon la revendication 12, dans laquelle les axes de rouleaux et/ou l'axe pendulaire (102) sont montés dans les cages d'axes en formant un assemblage à encliquetage amovible.

14. Jeu de pièces détachées pour une barre de guidage à rouleaux, dans lequel le jeu de pièces détachées comprend une barre de guidage, plusieurs rouleaux et au moins un arrêt de sécurité (100) selon l'une quelconque des revendications 1 à 11, dans lequel la barre de guidage présente plusieurs cages d'axes, dans lequel chacun des axes de rouleaux peut être monté dans deux des cages d'axes, dans lequel les rouleaux peuvent tourner autour des axes de rouleaux, dans lequel l'axe pendulaire (102) du au moins un arrêt de sécurité (100) peut être monté dans deux des cages d'axes.

15. Etagère en continu comprenant au moins une barre de guidage à rouleaux selon l'une quelconque des revendications 12 ou 13.
